# EUROPEAN PATENT APPLICATION

(11) **EP 2 541 420 A1**
(43) Date of publication of application: **02.01.2013**
(21) Application number: 12172415.7
(22) Date of filing: 18.06.2012
(51) Int. Cl.: G06F 11/36

(54) **Method and system for automated system migration**

(30) Priority: 28.06.2011 US 201113170564
(71) Applicant: Unisys Corporation, Blue Bell, PA 19422 (US)
(72) Inventor: Arcudi, William F, Laguna Niguel, CA California 92677 (US)
(74) Representative: Harrison Goddard Foote

(57) **Abstract**

Methods, systems, and programs described herein can provide automated testing and migration from a first application instance to a second application instance with minimal impact on the operational system. A parallel testing environment is automatically established to allow for parallel processing of inputs and comparison of outputs.

## Description

### FIELD

The instant patent application relates to methods, systems and programming for providing automated system testing. Particularly, the instant application is directed to methods, systems, and programming for providing system testing to qualify and migrate new infrastructure releases.

### BACKGROUND

When businesses wish to implement a change to their computer/data environment, such as adding a new application, system software release, or platform, prudence dictates that the new environment be tested and qualified prior to placing it into a live or production environment. This is done to ensure that proper functionality, compatibility, performance, and stability exists before going live with any changes. Such an effort is usually accomplished within a separate test environment, often on a separate partition or system from the production environment. It generally involves setting up a production-like application environment and running a battery of tests that exercise as much of the application's functionality and options as possible. Such a setup requires expensive infrastructure and additional manpower to be purchased and in place during the set-up, test, evaluation, migration and cut over period. Additionally, it is difficult to predict whether a new system will perform the same under actual live data load as it does under test conditions.

Business data centers for processing and managing data often operate 24 hours a day 7 days a week and need to be available to process data 100% of the time. Due to the critical nature of the data center operations, businesses or operators often are not willing to implement new systems or versions until they have achieved a high level of confidence that the new system or versions will not cause any system interruption, have a detrimental impact on system operations, or function incorrectly. For example, presently, when system upgrades need to be performed, they are often performed at off-peak hours and must be tested under off-line conditions. Furthermore, the testing is often performed with a small subset of data or stored data and does not test the new system or version under real live/real load conditions.

### SUMMARY

A need exists for a testing system and method that allows for workload instantiation to a parallel environment with controlled change (e.g., a new operating system level) and input replication/linkage, parallel processing, and output verification to ensure that workload processing and results are consistent between the existing environment and the new environment.

Methods, systems, and programs described herein can provide automated testing and migration from a first application instance to a second application instance with minimal impact on the operational system. A parallel testing environment is automatically established to allow for parallel processing of inputs and comparison of outputs.

In one embodiment, a method for testing and migrating a first application instance on a machine having at least one processor, storage, and a communication platform connected to a second application instance is disclosed. In the embodiment, the migrating compromises the steps of setting up the second application instance, providing the inputs from the first application instance to the second application instance, processing the inputs on the first application instance and processing the inputs on the second application instance, generating a first output and a second output, and comparing the first and second outputs.

In another embodiment, the inputs to the first application instance are duplicated and used as inputs to the second application instance. In another embodiment, the inputs to the second application instance comprise links from the inputs of the first application instance to the second application instance. In another embodiment the first application instance is eliminated based on the results of comparing the first and second outputs.

In another embodiment, the setting up of the second application instance is automated. In another embodiment, a machine readable non-transitory and tangible medium having information recorded thereon for migrating a first application instance on a machine having at least one processor, storage, and a communication platform, to a second application instance is disclosed. Thus, the machine sets up the second application instance, provides the inputs from the first application instance to the second application instance, processes the inputs on the first application instance and processes the inputs on the second application instance, generates a first output and a second output, and compares the first and second outputs.

In another embodiment, a system for automatically migrating from a first application instance to a second application instance is disclosed. The system comprises a system for implementing a first application instance, a system for implementing a second application instance, a data replicator for replicating the input to the first application instance, and an output comparator for comparing the output of the first application instance and the second application instance.

In another embodiment, the first system and/or the second system may be implemented in a cloud computing environment. In another embodiment, the second system automatically replaces the first system when the results of the output comparator for comparing the output of the first application instance and the second application instance exceed a threshold.

Additional advantages and novel features will be set forth in part in the description which follows, and in part will become apparent to those skilled in the art upon examination of the following and the accompanying drawings or may be learned by production or operation of the examples. The advantages of the disclosed systems, methods, and/or programming may be realized and attained by practice or use of various aspects of the methodologies, instrumentalities and combinations set forth in the detailed examples discussed below.

### BRIEF DESCRIPTION OF THE DRAWINGS

The methods, systems and/or programming described herein are further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

FIG. 1 illustrates an application operating in accordance with the prior art;

FIG. 2 illustrates a schematic representation of the automated migration testing in accordance with an exemplary embodiment;

FIG. 3 illustrates a system level diagram of the automated migration testing system, in accordance with an exemplary embodiment;

FIG. 4 illustrates a system level diagram of the automated migration testing system, in accordance with an exemplary embodiment; and

FIG. 5 illustrates a general computer architecture on which the present teaching can be implemented according to an exemplary embodiment.

### DETAILED DESCRIPTION

In the following detailed description, numerous specific details are set forth by way of examples in order to provide a thorough understanding of the relevant teachings. However, it should be apparent to those skilled in the art that the disclosed system and methods may be practiced without such details. In other instances, well known methods, procedures, components, and/or circuitry have been described at a relatively high-level, without detail, in order to avoid unnecessarily obscuring aspects of the instant disclosure.

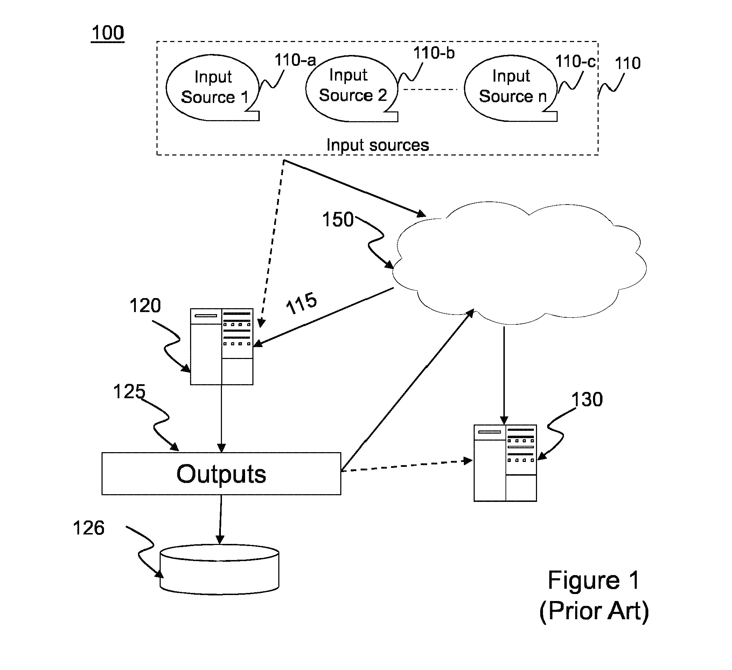

The instant disclosure relates to automated migration testing of software application and systems with minimal impact on on-going operations. FIG. 1 depicts an existing operational system 100. Operational system 100 is an existing system containing input sources 110, inputs 115, application 120, outputs 125, second application instance system 130 and network 150.

Network 150 in system 100 can be a single network or a combination of different networks. For example, a network can be a local area network (LAN), a wide area network (WAN), a public network, a private network, a proprietary network, a Public Telephone Switched Network (PSTN), the Internet, a wireless network, a virtual network, or any combination thereof. A network may also include various network access points, e.g., wired or wireless access points such as base stations or Internet exchange points through which an input source may connect to the network in order to transmit information via the network.

The input sources 110 include multiple input sources 110-a, 110-b, ... 110-c. An input source may correspond to another application's output, data coming from an entity, data from an individual, a business, an organization, or a data processing center. Input data 115 is the data generated by input sources 110 and conveyed to application system 120 either directly or via network 150.

Application 120 may be a traditional application operating on a user's server or may be a process operating within a processor or stored in memory. Application 120 may be a portion of a larger process or may be the entire process comprising both inputs and final outputs or intermediate outputs. It may be a proprietary application or an open application that processes and outputs data 125. Output data 125 may be any form of output data, machine readable, user readable, end data, intermediate data, and may be digital or analog and may be transient or storable. Output data 125 may be stored or conveyed in many forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more output sequences of one or more outputs for further processing or execution. Output data 125 may be conveyed back to network 150 or may be stored in database 126 for further processing.

Second application instance 130 may receive outputs 125 directly or over network 150 and may be any additional application that utilizes output data 125 as an input. Second application instance 130 may be a final step or an intermediate step in a process or a series of processes.

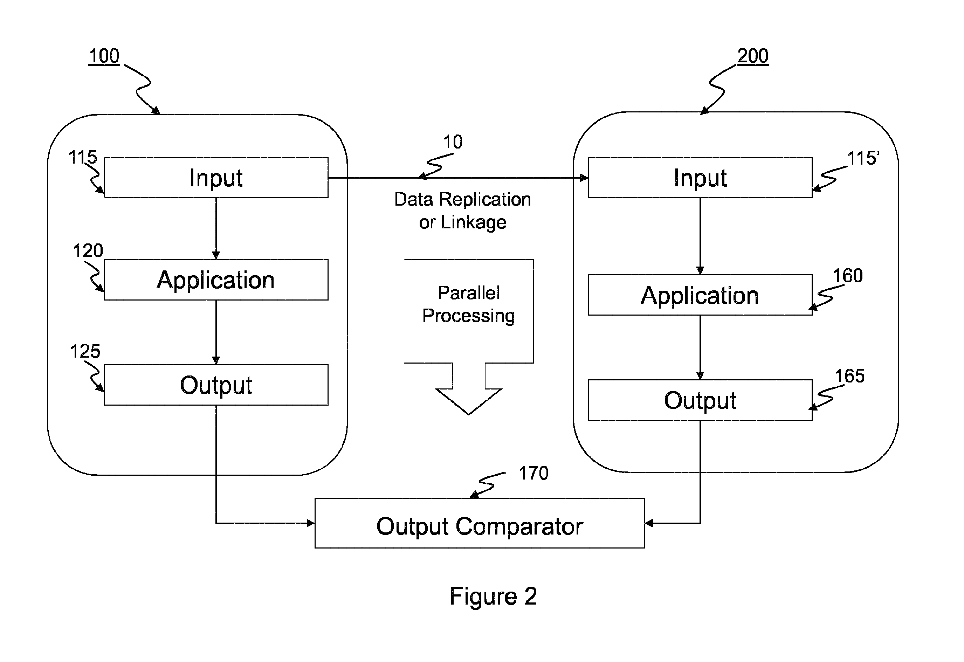

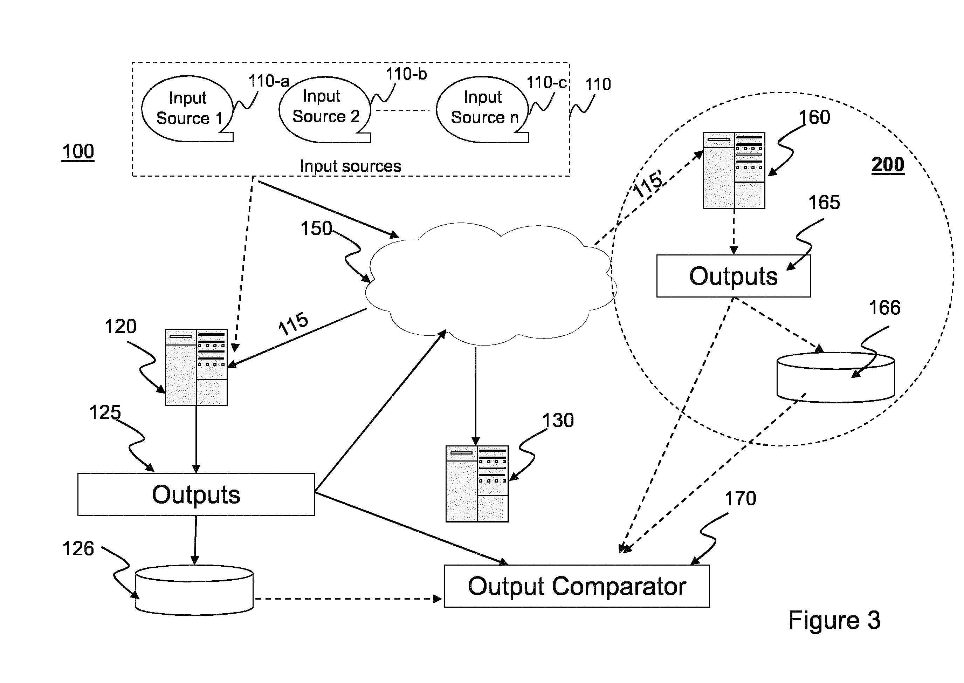

FIG. 2 provides a schematic representation of an embodiment of the present disclosure. As seen in FIGS. 2 and 3, operational system 100 and test system 200 are implemented in parallel. System 200 may be implemented on an identical set of hardware as system 100, a completely new set of hardware, software, and firmware, it may be implemented on a partition of the resources of system 100 or it may be implemented in a cloud computing environment. Further, system 200 may be implemented completely in software, hardware, or firmware, or any combination thereof. It may be implemented locally, or on a network, or in a cloud environment, utilizing additional user resources or third party resources. System 100 receives inputs 115 from input source 110. Inputs 115 are the inputs to application 120. Additionally, inputs 115 may be replicated, copied or linked via communications link 10 to system 200 and act as inputs 115' to a second or test application 160. Test application 160 processes inputs 115' and generates test outputs 165. Test outputs 165 may be stored in data store 166 or may be conveyed directly to output comparator 170 for analysis and comparison to outputs 125. Concurrently, application 120 processes inputs 115 and generates outputs 125. Since system 100 is operational, outputs 125 may be saved in data store 126, output in a final format, or conveyed back to network 150 for further processed in application 130. Additionally, as depicted in FIG. 2 outputs 125 are conveyed to output comparator 170. Output comparison in comparator 170 may occur in real time, i.e., as soon as the outputs are generated or may be compared non-real time utilizing the outputs stored in data stores 126 and 166.

In an embodiment, output comparator 170 compares outputs 125 from system 100 with test outputs 165 from system 200 to determine any differences, errors, or inconsistencies between the two systems. The outputs may be processed in real time for immediate comparison or may be stored in a database for subsequent or near real time processing. In this manner, any problems, errors, or differences detected in test outputs 165 can be troubleshot and corrected without impacting operational system 100. Further, in this manner, system 200 can be tested with live or near live data in real time and under real loading conditions.

FIG. 3 depicts an embodiment of the disclosure wherein system 200 is implemented in parallel to system 100. As seen in FIG. 3, system 200 may be implemented in hardware, be a partition on system 100's resources, or may be established on a network connected to network 150. Replicated inputs 115' are conveyed to system 200 for processing by test application 160. Outputs 165 are generated and may be conveyed directly to output comparator 170 for comparison to outputs 125 and/or may be stored in data store 166 for later use. In this manner, outputs 165 can be evaluated against outputs 125 to determine a level of confidence in system 200. Test system 200 may be operated "behind the scenes" for as long as needed and until all issues are resolved without interrupting system 100 or creating potentially risky service interruptions. Once a business is confident that test system 200 can operate as well as system 100, the business may terminate system 100 and cut over operations to system 200 without any service interruptions. Furthermore, an automated cut-over could be implemented, such that when test system 200 achieved a certain level of performance or confidence or reliability, test system 200 would be switched on line, replacing system 100. Such possible thresholds or triggers could be a specified success trigger, such as a temporal trigger (e.g., based on a day, a week, or a month), a number of transactions (inputs), a measure of data, or a date certain.

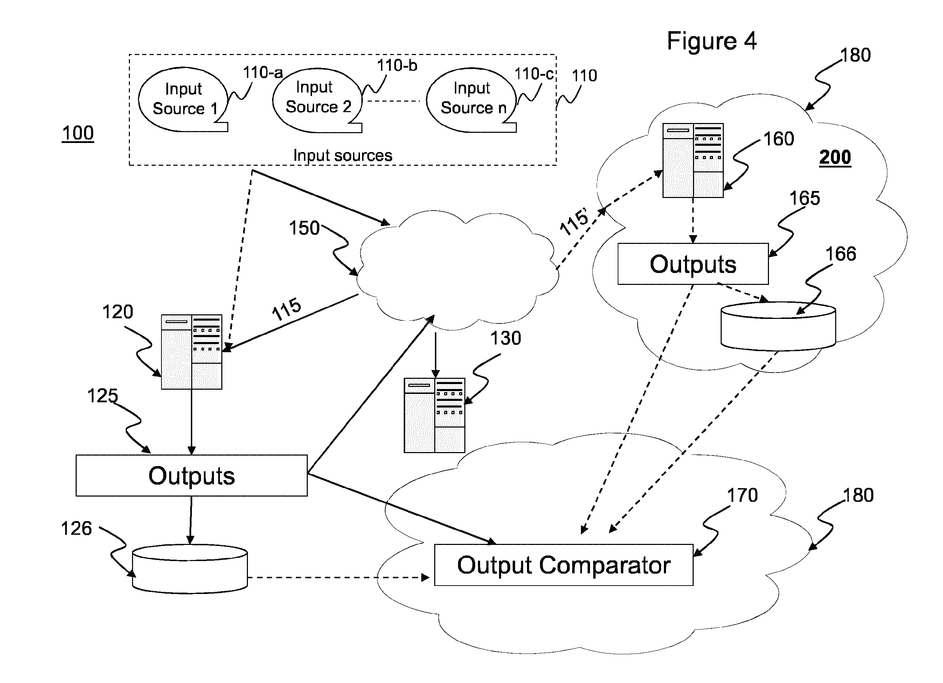

FIG. 4 depicts an exemplary embodiment, wherein system 200 is implemented in cloud computing environment 180. In this embodiment test system 200 infrastructure may be a server for hosting application 160 and may be a cloud infrastructure providing cloud computing services for processing the inputs 115'. The server, which may include a processor and memory, may run one or more applications, such as application 160 to provide a cloud-based service (or a cloud-based computing service) where the server (and/or other servers associated with the cloud-based service) may provide resources, such as software, data, media and other information, and management of such resources, to computers (or computing devices) via the Internet or other network, for example network 180.

As used herein, cloud computing may be a model, system or method for enabling convenient, on-demand network access to a shared pool of configurable computing resources (e.g., networks, servers, storage, applications, and services) that can be rapidly provisioned and released with minimal management effort or service provider interaction. A cloud computing environment provides computation, software, data access, and storage services that do not require end-user knowledge of the physical location and configuration of the system that delivers the services. Cloud computing infrastructure may be delivered through common centers and built-on servers and memory resource.

In one embodiment, the migration and testing of the new application involve a high degree of automation in establishing the environment, creating the necessary input linkages 10, and checking the output results using output comparator 170. For example, test system 200 could be established automatically with minimal user involvement and in a cloud environment. That is, once the test application 160 is identified, resources, such as processing, memory, storage, etc., could be automatically allocated locally, over a network or in a cloud computing environment, to establish test system 200. Further, inputs 115 from system 100 could be automatically linked to test system 200 via communications link 10 and test inputs 115' could be automatically replicated, generated, or linked. Similarly, in an embodiment, outputs 125 and 165 could be automatically compared to determine a level of confidence and reliability. Further, reliability thresholds could be established and verified and test system 200 could be automatically implemented when operational criteria were satisfied. Once a set level of confidence is achieved, be it by allowing system 200 to run until a specified success trigger, such as a temporal trigger (e.g., based on a day, a week, or a month), a number of transactions (inputs), a measure of data, or a date certain, without discrepancy the system could be instructed to discontinue the parallel environment and switch over to the system 200 as the live environment In this manner the migration testing could be automated to minimize the amount of trained personnel required to test and implement new system migrations.

In another embodiment, the test system 200 could run synchronously or asynchronously to the system 100 or more specifically, application instances 120 and 160 may be run synchronously or asynchronously. In instances where performance is an issue, such as where dissimilar performance of systems 100 and 200 exists, due to any number of factors such as system 200 being a slower system, one that is running more workload, has slower networking or disk access speed, etc., an asynchronous processing method would minimize impacts and may be preferred so as to not affect the performance of the primary application instance 120.

Running the two application instances simultaneously provides the opportunity for real-time performance measurement and immediate detection of output discrepancies. In cases where dissimilar performance of systems 100 and 200 does not allow one to do so, an asynchronous method may utilize a caching method (by any number of means such as a disk or memory cache, message queuing, etc.) to store input 115' and outputs 125 and 165 allowing the two applications to read input, process it, and produce output asynchronously and the comparator to function without regard to synchronization.

In another embodiment, system 200 has the ability to capture and replay input and output transactions to provide the user an opportunity for building test cases and perform "non-live" testing at a future date. In this embodiment, inputs 115' and outputs 165 could be stored in a database, in memory, or in any type of memory storage device.

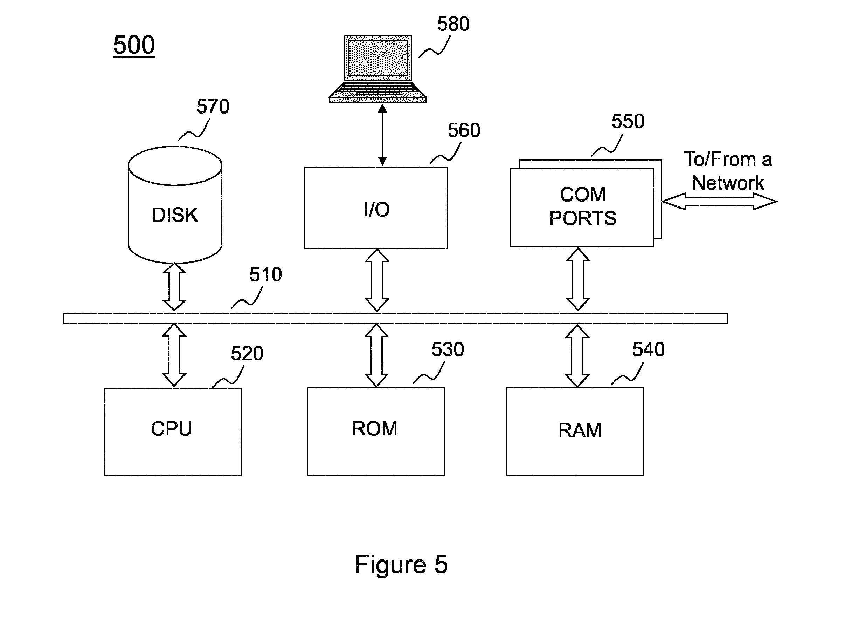

FIG. 5 depicts a general computer architecture on which the present teaching can be implemented and has a functional block diagram illustration of a computer hardware platform which includes user interface elements. The computer may be a general purpose computer or a special purpose computer. This computer 500 can be used to implement any components of system 100 and/or test system 200 as described herein. For example, input sources 100, application 120, test application 160, output comparator 170, database 126, or application 130 can all be implemented on a computer such as computer 500, via its hardware, software program, firmware, or a combination thereof. Although only one such computer is shown, for convenience, the computer functions relating to automated migration may be implemented in a distributed fashion on a number of similar platforms, to distribute the processing load.

The computer 500, for example, includes COM ports 550 connected to and from a network connected thereto to facilitate data communications. The computer 500 also includes a central processing unit (CPU) 520, in the form of one or more processors, for executing program instructions. The exemplary computer platform includes an internal communication bus 510, program storage and data storage of different forms, e.g., disk 570, read only memory (ROM) 530, or random access memory (RAM) 540, for various data files to be processed and/or communicated by the computer, as well as possibly program instructions to be executed by the CPU. The computer 500 also includes an I/O component 560, supporting input/output flows between the computer and other components therein such as user interface elements 580. The computer 500 may also receive programming and data via network communications.

Hence, aspects of the methods of automatically, establishing, testing and migrating applications, as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives and the like, which may provide storage at any time for the software programming.

All or portions of the software or systems may at times be communicated through a network such as the Internet or various other telecommunication networks. Such communications, for example, may enable loading of the software from one computer or processor into another, for example, from first application instance server or host computer into the hardware platform(s) or networks of a computing environment or other system implementing a computing environment or similar functionalities in connection with system migration. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like, which may be used to implement the system or any of its components as shown in the drawings. Volatile storage media include dynamic memory, such as a main memory of such a computer platform. Tangible transmission media include coaxial cables; copper wire and fiber optics, including the wires that form a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Those skilled in the art will recognize that the disclosed embodiments are amenable to a variety of modifications and/or enhancements. For example, although the implementation of various components described above may be embodied in a hardware device, it can also be implemented as a software only solution-e.g., an installation on an existing server. In addition, the application instances and their components as disclosed herein can be implemented as a firmware, firmware/software combination, firmware/hardware combination, or a hardware/firmware/software combination.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

## Claims

1. A method for migrating operations from a first application instance on a machine having at least one processor, storage, and a communication platform to a second application instance, comprising the steps of:
configuring the second application instance on a machine;
providing an input intended for the first application instance to the second application instance;
processing the input with the first application instance and processing the input with the second application instance;
generating a first output and a second output; and
comparing the first and second outputs.

2. The method of claim 1, wherein the providing an input intended for the first application instance to the second application instance comprises:
duplicating the input from an input source intended for the first application instance and furnishing it to the second application instance.

3. The method of claim 1, wherein the providing an input intended for the first application instance to the second application instance comprises:
linking the input from an input source intended for the first application instance to the second application instance.

4. The method of any preceding claim, further comprising:
eliminating the first application instance based on the results of comparing the first and second outputs.

5. The method of claim 4, wherein the eliminating is done automatically based on a trigger based on time, number of transactions, a measure of data, or a date certain.

6. The method of any preceding claim, wherein the second application instance is setup automatically via the communications link.

7. The method of any preceding claim, further comprising:
storing the generated first and second outputs.

8. The method of any preceding claim, wherein the comparing of the first and second outputs occurs in real time.

9. The method of claim 7, wherein the comparing occurs after storing of the first and second outputs

10. A machine readable non-transitory and tangible medium having information recorded thereon for migrating a first application instance on a machine having at least one processor, storage, and a communication platform, to a second application instance to causes the machine to perform the following:
configuring the second application instance; providing an input intended for the first application instance to the second application instance;
processing the input with the first application instance and processing the input with the second application instance;
generating a first output and a second output; and
comparing the first and second outputs.

11. A system for automatically migrating from a first application instance to a second application instance comprising:
a first system for implementing a first application instance;
a second system for implementing a second application instance;
a data replicator for replicating the input from the first application instance;
a communications link for conveying the replicated inputs from the first application instance to the second application instance; and
an output comparator for comparing the output of the first application instance and the second application instance.

12. The system of claim 11, wherein the first system and the second system are implemented on one system.

13. The system of claim 11, where the second system comprises the second application instance, the data replicator, and the output comparator.

14. The system of claim 11, wherein a portion of the first system is implemented in a cloud computing environment and/or a portion of the second system is implemented in a cloud computing environment.

15. The system of claim 11, wherein the first system and the second system are implemented in a cloud computing environment.

16. The system of any one of claims 11 to 15, wherein the first system and the second system run asynchronously.

17. The system of any one of claims 11 to 15, wherein the first system and the second system run synchronously.

18. The system of any one of claims 11 to 15, wherein the second system automatically replaces the first system automatically based on a trigger based on time, number of transactions, a measure of data, or a date certain.
